# EUROPEAN PATENT APPLICATION

(11) **EP 4 769 104 A1**
(43) Date of publication of application: **01.07.2026**
(21) Application number: 24909696.7
(22) Date of filing: 23.07.2024
(51) Int. Cl.: G06F 3/04847

(54) **INTERFACE PROCESSING METHOD AND ELECTRONIC DEVICE**

(30) Priority: 27.12.2023 CN 202311837659
(71) Applicant: Honor Device Co., Ltd., Shenzhen, Guangdong 518040 (CN)
(72) Inventor: WANG, Wei, Shenzhen, Guangdong 518040 (CN); XIN, Zhenwen, Shenzhen, Guangdong 518040 (CN); SUN, Wenyong, Shenzhen, Guangdong 518040 (CN)
(74) Representative: Henselmann, Alexander Gerhard
(86) International application number: PCT/CN2024/106875
(87) International publication number: WO 2025/138742

(57) **Abstract**

An interface processing method and an electronic device. The method is applied to the electronic device, and a first application and a second application are installed in the electronic device. The method includes: The electronic device runs the first application, and when a user interface of the electronic device displays a first window picture of the first application, receives a first operation of a user for starting the second application; and when a first attribute is set in the first application, in a process of starting and running the second application in response to the first operation, the electronic device successively displays a starting window and a second window picture of the second application in the user interface, where the starting window is an intermediate interface for starting the second application, and the first attribute is used to indicate not to display the starting window. In embodiments of this application, response duration may be shortened, and user interaction experience may be improved.

## Description

This application claims priority to Chinese Patent Application No. 202311837659.8, filed with the China National Intellectual Attribute Administration on December 27, 2023 and entitled "INTERFACE PROCESSING METHOD AND ELECTRONIC DEVICE", which is incorporated herein by reference in its entirety.

### TECHNICAL FIELD

This application relates to the field of terminal device technologies, and in particular, to an interface processing method and an electronic device.

### BACKGROUND

In a process in which a user interacts with an electronic device, different applications are used. If a new application needs to be started for display, the new application needs to start to be displayed after drawing of an application interface is completed. A waiting time for starting and drawing the new application is relatively long, and the user can clearly perceive a low response speed and a long delay of a display process, leading to poor user interaction experience.

### SUMMARY

Embodiments of this application provide an interface processing method and an electronic device, so as to increase a response speed of animation processing and display, and improve user interaction experience.

According to a first aspect, an embodiment of this application provides an interface processing method, where a first application and a second application are installed in the electronic device, and the method includes: The electronic device runs the first application, and when a user interface of the electronic device displays a first window picture of the first application, receives a first operation of a user for starting the second application; and when a first attribute is set in the first application, in a process of starting and running the second application in response to the first operation, the electronic device successively displays a starting window and a second window picture of the second application in the user interface, where the starting window is an intermediate interface for starting the second application, and the first attribute is used to indicate not to display the starting window.

The starting window is a window displayed before a window picture of the second application is displayed in a process of starting the second application. The starting window may be a window including a second application icon, a splash screen advertisement, an identification picture, or the like, which is not limited in this application.

In an implementation of this application, response waiting duration of the electronic device is shortened, and the starting window is added to a response process, so as to ensure that a user does not perceive an obvious lag of a picture, thereby improving user experience.

In a possible implementation, the first attribute includes at least one of a translucent attribute, a floating-disabled attribute, and a wallpaper-disabled attribute; the translucent attribute indicates that the starting window is displayed in a translucent state, the floating-disabled attribute indicates that the starting window is not displayed in a floating form, and the wallpaper-disabled attribute indicates that the starting window is not displayed in a wallpaper form. In this way, the setting of the first attribute indicates that the first application jumps to another application, and a starting window of the another application is not displayed in a jump process. A form or setting of the starting window generally includes an opaque case, the floating form, and the wallpaper form for presentation. The first attribute is a disabled state of the foregoing state, and may define that the starting window is not displayed in the jump process. The above settings are exactly ignored herein to ensure a response speed.

In a possible implementation, the method further includes: When the first attribute is not set in the first application, the starting window and the second window picture are successively displayed in response to the first operation. In this way, when the first attribute is not set, the starting window is added as usual, so as to ensure a faster starting response and good user experience.

In a possible implementation, the method further includes: The electronic device determines, in response to the first operation, whether the first attribute is set in the first application, where when the first application stores setting information of the first attribute, the first attribute is set in the first application; or when the first application stores setting information of the first attribute, the first attribute is not set in the first application. This can ensure that impact of the first attribute on the display is executed. When the first attribute exists, the first attribute may be ignored, and drawing and displaying of the starting window start to be performed, so as to ensure a fast response in an application jump process, thereby improving user experience.

In a possible implementation, the method further includes: The electronic device sets, in response to the first operation, the second window picture to visualization, and sets the first window picture to non-visualization, where the visualization is used to indicate to display a window picture, and the non-visualization is used to indicate not to display a window picture. In this way, after pausing the first activity, the electronic device may immediately perform a processing procedure on the first window picture, so as to ensure a speed and timeliness of an animation response.

In a possible implementation, before the setting the second window picture to visualization, and setting the first window picture to non-visualization, the method further includes: pausing a first activity of the first application. In this way, after the first activity is paused, the electronic device may immediately process window pictures of two applications, so as to ensure timeliness of an animation.

In a possible implementation, after the pausing a first activity of the first application, the method further includes: A second activity of the second application is started, and a first frame of data used to start the second application is obtained; and when the first frame of data is obtained, image information of the second window picture is drawn. In this way, after the first activity is paused, the electronic device may immediately process the window pictures of the two applications and draw the window picture of the second application, and a plurality of tasks are all processed in a same period of time, thereby ensuring continuity of the display and timeliness of a response.

In a possible implementation, the electronic device further includes a system service, and the pausing a first activity of the first application includes: The system service pauses the first activity of the first application after the first application receives the first operation of the user for starting the second application; the method further includes: the system service sends a process starting request to the second application, where the process starting request is used to request to start a process of the second application; and the second application starts a first process; the setting the second window picture to visualization, and setting the first window picture to non-visualization includes: the system service sets the second window picture to visualization, and sets the first window picture to non-visualization; and the starting a second activity of the second application, and obtaining a first frame of data used to start the second application includes: the system service starts the second activity of the second application, and obtains the first frame of data used to start the second application.

In a possible implementation, the electronic device further includes a system service and a system library, and that the electronic device determines whether the first attribute is set in the first application includes: The system service determines whether the first attribute is set in the first application; and the method further includes: when the first attribute is set in the first application, the system service requests the system library to draw image information of the starting window.

In this way, when the first attribute that needs to be used is obtained, the first attribute may be ignored, and drawing and displaying of the starting window start to be performed, so as to ensure a fast response in an application jump process, thereby improving user experience.

In a possible implementation, the successively displaying a starting window and a second window picture of the second application in the user interface includes: A partial picture of the first window picture and a partial picture of the starting window are displayed in the user interface at a first moment; the starting window without including the first window picture is displayed in the user interface at a second moment; and the second window picture is displayed in the user interface at a third moment. In this way, a smooth sliding process is added to ensure continuity of the display and better user interaction experience.

According to a second aspect, an embodiment of this application provides an electronic device. The electronic device includes one or more processors and one or more memories. The one or more processors are coupled to the one or more memories. The one or more memories are configured to store computer program code. The computer program code includes computer instructions. When the one or more processors execute the computer instructions, the electronic device is enabled to perform the interface processing method according to any one of the first aspect or the possible implementations of the first aspect.

According to a third aspect, an embodiment of this application provides a computer program product including instructions. When the computer program product runs on an electronic device, the electronic device is enabled to perform the interface processing method according to any one of the first aspect or the possible implementations of the first aspect.

According to a fourth aspect, an embodiment of this application provides a computer-readable storage medium including instructions. When the instructions are run on an electronic device, the electronic device is enabled to perform the interface processing method according to any one of the first aspect or the possible implementations of the first aspect.

According to a fifth aspect, an embodiment of this application provides a chip system. The chip system is applied to an electronic device, the chip system includes one or more processors, and the processors are configured to call computer instructions, to enable the electronic device to perform the interface processing method according to any one of the first aspect or the possible implementations of the first aspect.

### BRIEF DESCRIPTION OF DRAWINGS

FIG. 1A is a schematic diagram of a hardware structure of an electronic device according to an embodiment of this application;
FIG. 1B is a schematic diagram of a software structure of an electronic device according to an embodiment of this application;
FIG. 2A~FIG. 2F are schematic diagrams of a group of user interfaces according to an embodiment of this application;
FIG. 3 is a schematic flowchart of an interface display method according to an embodiment of this application;
FIG. 4A, FIG. 4B(1), and FIG. 4B(2) are sequence diagrams for displaying a group of user interfaces according to an embodiment of this application;
FIG. 5A and FIG. 5B are schematic diagrams of another group of user interfaces according to an embodiment of this application;
FIG. 6A and FIG. 6B are schematic flowcharts of another interface display method according to an embodiment of this application; and
FIG. 7A and FIG. 7B are sequence diagrams of a group of application jump processing according to an embodiment of this application.

### DESCRIPTION OF EMBODIMENTS

Terms used in the following embodiments of this application are merely intended to describe specific embodiments, but not intended to limit this application. As used in this specification and the appended claims of this application, singular expressions "one", "a/an", "the", "foregoing", and "this" are intended to include plural expressions, unless otherwise clearly specified in the context. It should be further understood that the term "and/or" used in this application indicates and includes any or all possible combinations of one or more listed items.

Embodiments of this application disclose an application jump method and an electronic device, so as to increase a response speed of interface display, and improve user interaction experience.

In response to an operation of the user, the electronic device may enable a user interface to jump from a user interface of one application to a user interface of another application. For example, the user currently stays in a communication software interface, which displays a shared video link. The user may tap this video link to watch a video. In response to the user operation of tapping the video link, the electronic device may display a user interface of the video, and the user interface may include a jump request window. The user may tap a control used to jump to a video application. In response to the foregoing jump operation, the electronic device may start the video application, so that a picture of a display screen jumps from a user interface of one application to a user interface of another application.

The electronic device in the embodiments of this application may be a device with a touchscreen, such as a mobile phone, a tablet computer, a desktop computer, a notebook computer, a handheld computer, a smart band, an ultra-mobile personal computer, a netbook, a personal phone, a personal data assistant, or an augmented reality (AR)/virtual reality (VR). A specific form of the electronic device is not limited in this application.

**The following describes an apparatus used in the embodiments of this application.**

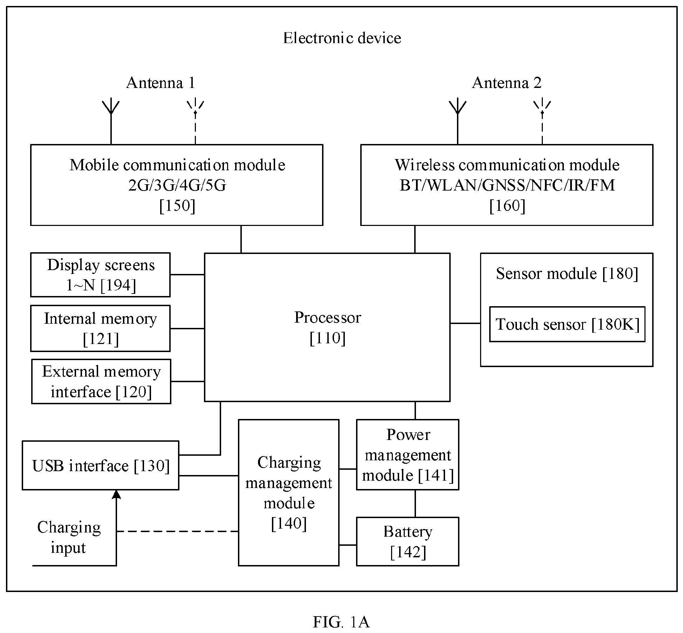

FIG. 1A is a schematic diagram of a hardware structure of an electronic device according to an embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, a sensor module 180, a display screen 194, and the like. The sensor module 180 may include a touch sensor 180K and the like.

It may be understood that the structure illustrated in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly call the instructions or the data from the memory. This avoids repeated access and shortens a waiting time of the processor 110, thereby improving system efficiency.

It may be understood that the interface connection relationship between the modules illustrated in the embodiments of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display screen 194, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The electronic device implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N display screens 194, where N is a positive integer greater than 1.

The touch sensor 180K is also referred to as a "touch panel". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor.

In the embodiments of this application, the electronic device 100 may detect a user operation by using the touch sensor 180K. A user operation may include touching a screen by the user to a touch event, for example, the user taps to jump from one application to another application. The display screen 194 may display an application interface and a picture in a jump process.

Optionally, the user operation may alternatively be a remote operation. For example, a gesture sensing sensor is installed in the electronic device, and the gesture sensing sensor may detect a remote operation of the user. The remote operation may be operations such as a startup for an application or a jump between applications. The electronic device may determine the remote operation by using the gesture sensing sensor.

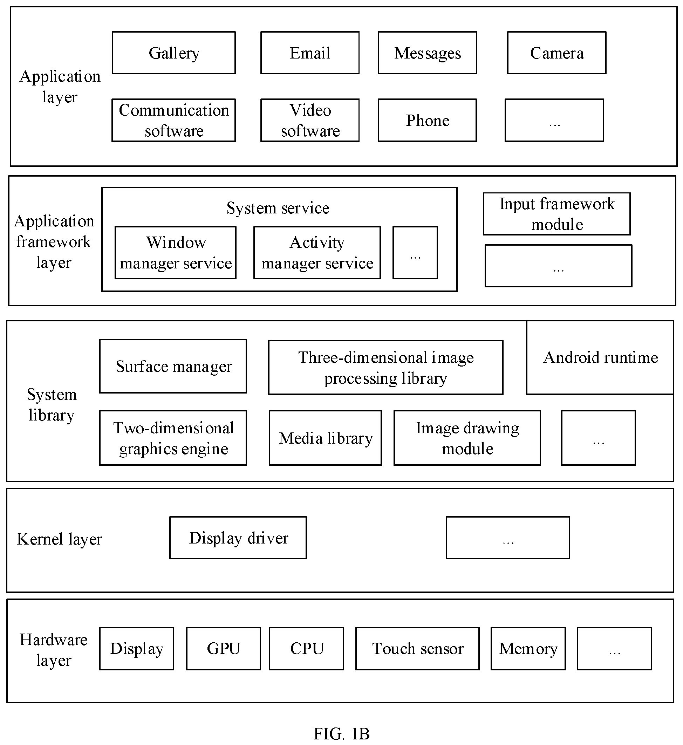

FIG. 1B is a schematic diagram of a software structure of an electronic device according to an embodiment of this application.

As shown in FIG. 1B, a software framework of the electronic device in this application may include an application layer, an application framework layer (framework, FWK), a system library, an Android runtime, a hardware layer, and a kernel layer (kernel).

The application layer may include a series of application packages, for example, application programs such as gallery, email, messages, camera, communication software, video software, and phone (which may also be referred to as applications; some of the foregoing applications are not shown). In the embodiments of this application, the application may be any application at the application layer, and the user may open or close the application, or may perform an operation in the application.

The application framework layer provides an application programming interface (application programming interface, API) and a programming framework for an application at the application layer. The application framework layer includes some predefined functions.

As shown in FIG. 1B, the application framework layer may include a system service, an input framework module, and the like.

The system service is a group of core function services provided by the FWK layer, and is used to support various requirements of the application. These function services may be called by other modules and applications. The system service may include a window manager service (Window Manager Service, WMS) and an activity manager service (Activity Manager Service, AMS).

The WMS is configured to manage a window program. The WMS manages all windows, including creation, deletion and modification.

The AMS is mainly responsible for tracking and managing an activity status of the application. To be specific, the AMS can manage a lifecycle of the activity.

The Activity is an interface that interacts with the user, and provides a window for the user to complete a related operation. For example, the user taps an icon of the first application on a home screen of the electronic device, and the electronic device needs to start the first application. The electronic device creates and starts a main process of the first application, and then the main process of the first application loads an interface 1 corresponding to the activity. The user interacts with the interface 1 corresponding to the activity to display a new interface. The state of the window may include a visible state and an invisible state. The user cannot interact with a window in the visible state, and the user can interact with a window in the invisible state.

The Android system may manage the Activity by using an Activity stack, and the Activity itself is managed by using a lifecycle method. A typical lifecycle of the Activity is a normal lifecycle process in which the Activity is created, run, stopped, destroyed, and so on in the case of user participation. Different lifecycles may correspond to different states. Detailed descriptions of several states of the Activity:

Active state (active/running): The activity is on a stack top and is in a visible state, and can interact with the user.

Paused state (paused): When the Activity loses a focus, or is placed on the stack top by a new non-full-screen Activity or by a translucent Activity, the Activity is switched to the Paused state. In this case, the Activity cannot interact with the user, and all state information and member variables of the Activity are kept. The Activity may be reclaimed by the system only when the memory of the system is insufficient.

Stopped state (Stopped): When one Activity is completely covered by another Activity, the covered Activity enters the Stopped state. In this case, the Activity is invisible and all the state information and the member variables of the Activity are kept.

Destroyed state (killed): When the Activity is reclaimed by the system, the Activity is in the Killed state.

The several states of the lifecycle of the Activity are described above. The following describes execution methods for switching different states of the lifecycle, and describes procedures for calling these execution methods.

onStart: When this method is called back, it indicates that the Activity is starting. The Activity is in the visible state, but has not been displayed in the foreground. Therefore, the Activity cannot interact with the user. It may be understood that the Activity has been displayed but is invisible to the user.

onResume: When this method is called back, the Activity is visible in the foreground and can interact with the user (in the Active/Running mode).

onPause: When this method is called back, it indicates that the Activity is being stopped and is in the Paused mode.

onStop: This method is usually performed after execution of the onPause is completed, indicating that the Activity is to be stopped or completely covered (Stopped). In this case, the Activity is invisible and runs only in the background.

onDestroy: This method is the last execution method in the lifecycle, in which the Activity is being destroyed and is in the Killed state.

A main thread of the application may be responsible for processing animation drawing and display. After receiving the jump event, the application may perform animation setting, and schedule the view system to draw a jump image, so as to facilitate subsequent display of an animation picture.

The input framework module may obtain a user operation reported by the touch sensor, the gesture sensing sensor, or the like, and report the user operation to the application. For example, the touch sensor may detect a touch event. The touch event may include a jump event. The touch sensor reports the touch event to the input framework module, and then the input framework module may continue to report the touch event to the application.

The Android runtime includes a kernel library and a virtual machine. The Android runtime is responsible for scheduling and management of an Android system.

The kernel library includes two parts: functional functions that need to be called by a java language, and a kernel library of Android.

The application layer and the application framework layer run in the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional image processing library (for example, OpenGL ES), a 2D graphics engine (for example, an SGL), and an image drawing module.

The surface manager is configured to manage a display subsystem, and provide fusion of 2D and 3D layers for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional image processing library is configured to implement three-dimensional graphics drawing, image rendering, compositing, layer processing, and the like.

The 2D graphics engine is a drawing engine for 2D graphics drawing.

The image drawing module may draw a window layer in an animation image.

The kernel layer is a foundation of the Android operating system, and a final function of the Android operating system is implemented by using the kernel layer. The kernel layer includes at least a display driver, and the like. The display driver may obtain, from a buffer buffer, completed image frames that are subject to rendering and compositing, and control the display to successively display the image frames.

The hardware layer may include a display, a graphics processing unit (graphics processing unit, GPU), a touch sensor, a memory, and the like. The touch sensor can detect a jump event of a touch operation of the user. The display can display the image frame of the starting window. The graphics processing unit may perform a process of image rendering and compositing. The central processing unit (CPU) may draw an image.

It should be noted that the schematic diagram of the software structure of the electronic device shown in FIG. 1B provided in this application is merely an example, and does not limit specific module division in different layers of the Android operating system. For details, refer to the description of the software structure of the Android operating system in conventional technologies. In addition, the shooting method provided in this application may alternatively be implemented based on another operating system, and examples are not provided in this application one by one.

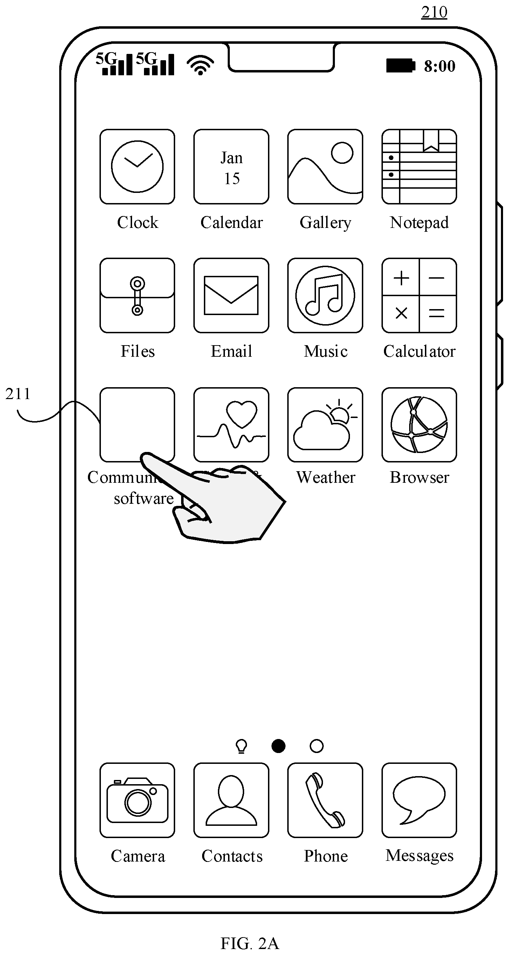

FIG. 2A~FIG. 2F are schematic diagrams of a group of user interfaces disclosed by way of example in an embodiment of this application.

FIG. 2A shows an example of a schematic diagram of a user interface of an electronic device. The user powers on the electronic device of the user, so that a display screen of the electronic device displays a home screen of the electronic device, that is, a user interface 210. As shown in FIG. 2A, the user interface 210 may include an icon of at least one application (for example, Clock, Calendar, Gallery, Notepad, Files, Email, Music, Calculator, Communication Software 211, Sports & Health, Weather, Browser, Camera, Contacts, Phone, and Messages). Locations of the icon of the application and the name of the corresponding application may be adjusted based on a preference of the user. This is not limited in this application.

It should be noted that the schematic diagram of the interface of the electronic device shown in FIG. 2A is an example display of this embodiment of this application, and the schematic diagram of the interface of the electronic device may alternatively be another style. This is not limited in this application.

In FIG. 2A, the user may tap a communication software 211 control in the user interface 210. A user interface 220 for opening the communication software 211 control may be displayed in response to the operation of tapping the communication software 211 control by the user.

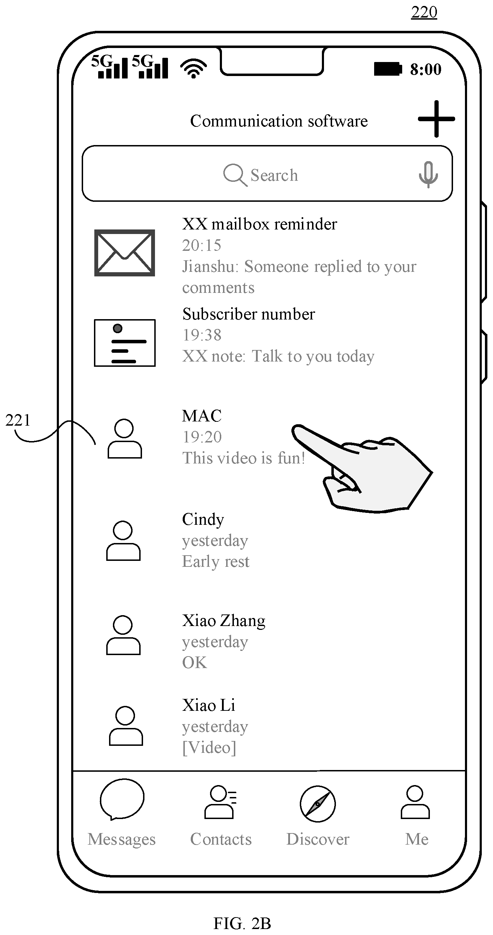

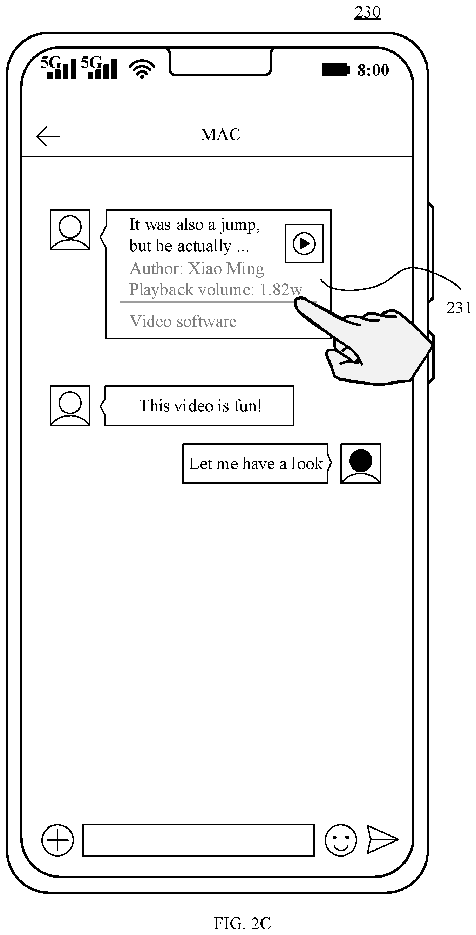

As shown in FIG. 2B, the user interface 220 is a chat list interface of the communication software. The chat list interface includes a MAC option 221. The user may tap the MAC option 221 to open a chat interface with a MAC. As shown in FIG. 2C, the electronic device may display a user interface 230 in response to the operation of tapping the MAC option 221 by the user.

As shown in FIG. 2C, the MAC in the user interface 230 shares a video link 231. When the user wants to view the video, the user may tap the video link 231. The electronic device may display a user interface 240 in response to the operation of tapping the video link 231 by the user.

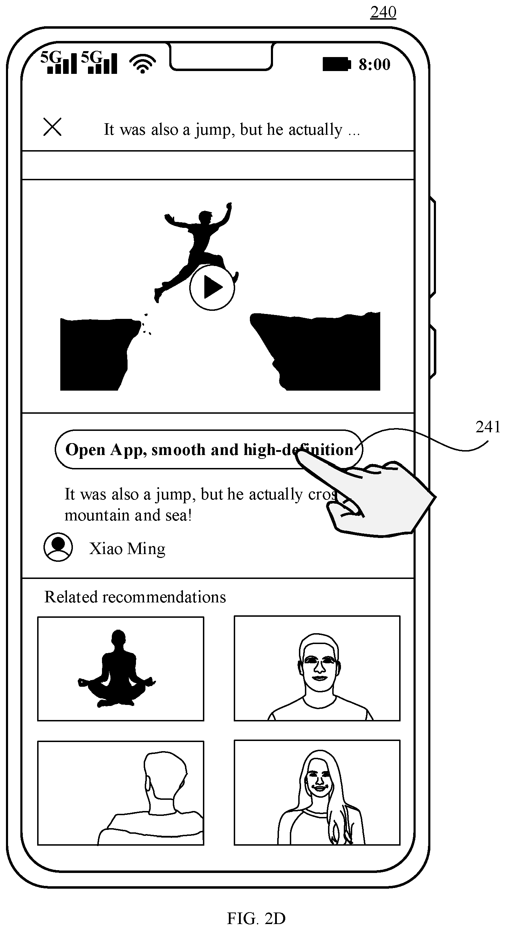

As shown in FIG. 2D, the user interface 240 displays a control 241 for jumping to a video application. When the user taps the control 241 for jumping to the video application, the electronic device may display the starting window in response to the foregoing operation. It should be noted that the user may alternatively tap another location of the user interface 240, and the electronic device may display a starting window (a user interface 250). A specific user operation is not limited in this application.

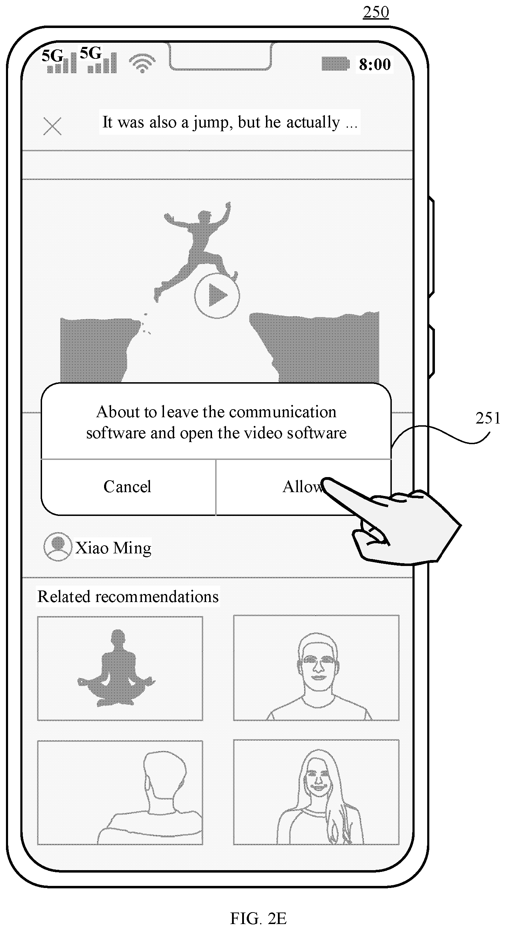

As shown in FIG. 2E, the electronic device may display the user interface 250 in response to an operation in the user interface 240, where the user interface 250 includes a starting window 251. The starting window 251 may include information for requesting a jump: "Immediately leave the communication software, and open the video software" and a "Cancel" control and an "Allow" control. The "Cancel" control is used to keep displaying the communication software without jumping. The "Allow" control is used to jump from the communication software to the video software. When the user taps the "Allow" control, the electronic device jumps from the communication software to the video software in response to the foregoing operation.

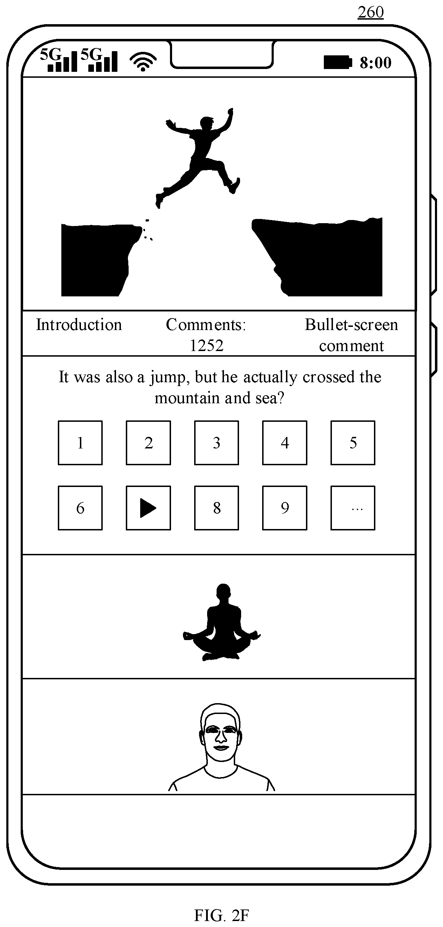

As shown in FIG. 2F, the electronic device displays a user interface 260 in response to the operation of tapping the "Allow" control. The user interface 260 may include a first video, where the first video is a video corresponding to the video link 231. The user may tap a playback control in the user interface 260 to watch the first video.

After the user taps the "Allow" control, the electronic device keeps displaying the user interface 240 for a period of time, and then directly displays the user interface 260. The period of time during which displaying of the user interface 240 is kept can be notably perceived by the user. Therefore, a picture is kept unchanged for a long time during response waiting, and the user can perceive a lag in a process in which the device responds to the jump, leading to poor user experience.

Specific content of an operation and display in the foregoing application interface jump process is merely an example for description, and applications before and after the jump may alternatively be other applications. This is not limited in this application. In addition, a type of the user operation is a tap or touch operation, or may be another manner. For example, an operation manner may alternatively be a user gesture or a voice. This is not limited in this application. In addition, the processes before and after the jump in FIG. 2A~FIG. 2F is also merely an example for description. This is not limited in this application, either.

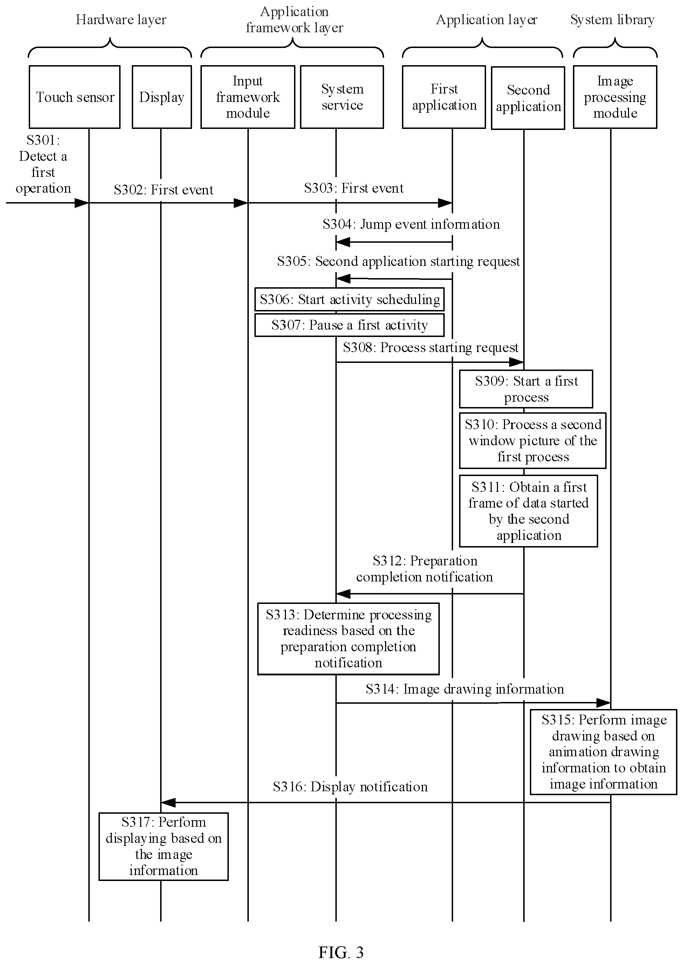

As shown in FIG. 3, with reference to the application interface jump processes shown in FIG. 2A~FIG. 2F, an embodiment of this application discloses a schematic flowchart of an interface display method. As shown in FIG. 3, the application jump method may include but is not limited to the following steps.

This embodiment of this application relates to a jump between two applications. Currently, a first application is in a started state. A user interface of an electronic device displays a window picture of the first application, a system service has an activity1 of the first application, and the activity1 is in an active state. The electronic device does not run a second application, and a task stack of the electronic device does not have an activity of the second application.

S301: A touch sensor detects a first operation.

The first operation is an operation of triggering a jump from the first application to the second application, for example, an operation of tapping the "Allow" control by the user in FIG. 2E. A specific manner of the first operation of jumping between different applications varies. This application provides an example for description only, and sets no limitation thereto.

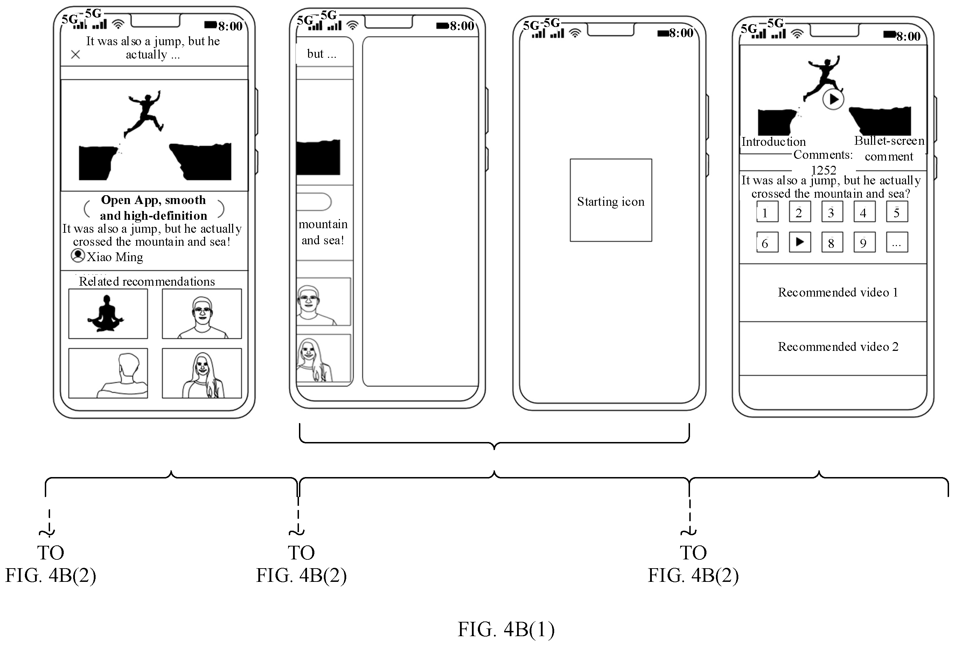

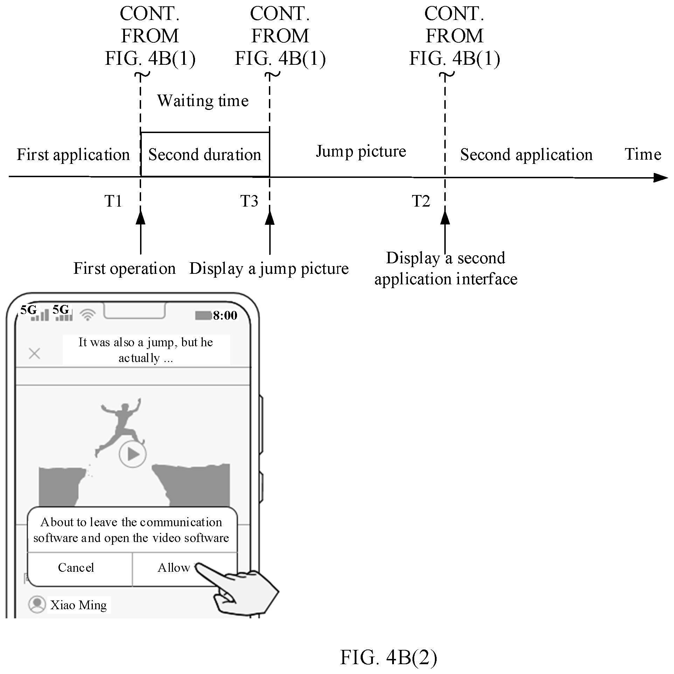

With reference to FIG. 4B(1) and FIG. 4B(2), at a moment T1, the electronic device displays a first window picture of the first application, the user taps a control used to jump to the second application, and the touch sensor detects the first operation.

S302: The touch sensor sends a first event to an input framework module.

The touch sensor sends the first event to the input framework module. Correspondingly, the input framework module receives the first event from the touch sensor. The first event may include a touch location (coordinates) and the like. After receiving the first event, the input framework module determines, based on that the current display window is a display window of the first application, that the first event needs to be processed by the first application.

S303: The input framework module sends the first event to the first application.

After receiving the first event, the input framework module may send the first event to the first application. Correspondingly, the first application receives the first event from the input framework module.

S304: The first application sends jump event information to the system service.

After receiving the first event, the first application determines, based on the first event, a procedure in which the second application needs to be started, that is, starts to perform a jump processing procedure.

The first application may send the jump event information to the system service. Correspondingly, the system service may receive the jump event information from the first application. The jump event information is used to indicate to exit the first application window to the paused state, for example, a cover of a video corresponding to a link in FIG. 2C.

S305: The first application sends a second application starting request to the system service.

The first application may further send the second application starting request to the system service. Correspondingly, the system service receives the second application starting request from the first application. The second application starting request is used to request to start the second application.

S306: The system service starts activity scheduling based on the second application starting request.

After receiving the jump event information, the system service may call a start activity inner function (starting the activity scheduling based on the starting request). The start activity inner function is used to start a next application, that is, to start the second application.

S307: The system service pauses the first activity activity1.

After receiving the jump event information, the system service may pause the current main thread and the activity1 of the first application. The system service may perform onPaused callback on the activity1, so that the activity1 changes from the active state to the Paused state. The user interface of the electronic device displays the window of the first application, and is in a non-interactive state.

After pausing the first activity, the system service may determine that a jump from the first application to the second application is required, and the system service needs to determine whether there is theme information indicated as a first attribute. When there is the theme information indicated as the first attribute (the first attribute is set in the first application), the system service determines that the starting window between the first application and the second application does not need to be displayed. When there is no theme information indicated as the first attribute (the first attribute is not set in the first application), the system service determines that the starting window between the first application and the second application needs to be displayed. In this embodiment of this application, the first attribute for jumping to another application is set in the first application. Therefore, when the system service of the electronic device determines that the first attribute is set in an API of the first application, for the display in the jump process, the system service does not add a starting window corresponding to starting another application. When the first attribute is jumping from the first application to another application (starting and displaying the window of the another application), a setting attribute of the starting window (of the another application) is not displayed.

For example, because the system service reads the first attribute, the system service cannot generate the starting window.

S308: The system service sends a process starting request to the second application.

After receiving the second application starting request, the system service needs to send the process starting request to the second application. Correspondingly, the second application receives the process starting request from the system service. The process starting request is used to indicate the second application to start.

S309: The second application starts the first process.

After receiving the process starting request from the system service, the second application may create a first process of the second application, where the first process may be a process in a main thread (acitivity thread main) of the second application. Then, the electronic device may call a bind application function to perform initialization and fill the first process.

S310: The second application processes the second window picture of the first process.

After starting the first process, the second application may first perform a process of starting the first window picture of the first process.

Specifically, the second application starts a lifecycle of the second activity acitivity2, calls an onStart function, and calls an onResume function. After the acitivity2 is started, the window of the second application is adjusted to a visible state. Currently, because the second window picture of the second application is not displayed, the user cannot interact with the second application.

The second window picture is a first frame of window picture displayed by the second application.

S311: The second application obtains a first frame of data for starting the second application.

After starting of the acitivity2 of the second application is completed, the first frame of data of the second application picture may be obtained. Specifically, the second application may call a doFrame function.

S312: The second application sends a preparation completion notification to the system service.

The second application may send the preparation completion notification to the system service. Correspondingly, the system service may receive the preparation completion notification from the second application. The preparation completion notification is used to notify the system service to start drawing an image.

S313: The system service determines, based on the preparation completion notification, that processing is ready.

After receiving the preparation completion notification, the system service may determine that processing of the second application is ready, and display can be started.

S314: The system service sends image drawing information to an image processing module.

After the processing is ready, the system service may send the image drawing information to the image processing module. Correspondingly, the image processing module may receive the image drawing information from the system service. The image drawing information may include information used to draw and process an image, for example, a window size.

The image drawing information is used to indicate to draw the second window picture of the second application.

S315: The image processing module draws an image based on the image drawing information to obtain image information.

After receiving the image drawing information, the image processing module may perform image generation, rendering, and composition processing based on the image drawing information to obtain the image information. The image processing module may be a module such as a system library including a media library, a two-dimensional image engine, a surface manager, and a three-dimensional image processing library. The image processing module may complete drawing (actual processing hardware may be a GPU) of the image obtained by drawing the application, and perform compositing (which may be specifically performed by the surfaceFlinger) on the layer that is subject to drawing and rendering, to obtain the image information. After obtaining the image information, the image processing module may buffer the image information into a display buffer (buffer), waiting for display.

**In** this case, the image information is image information of the second window picture of the second application.

S316: The image processing module sends a display notification to the display.

After the drawing is completed, the image processing module may send the display notification to the display. The display may receive the display notification from the image processing module. The display notification may indicate a notification that the image processing module has finished drawing and display may be started.

S317: The display performs displaying based on the image information.

After obtaining an animation image display instruction, the display may obtain an animation image from the display buffer, and display the animation image in the buffer. After the electronic device displays the second window picture, the user may interact with the second application.

With reference to FIG. 2F, a picture currently displayed on the display is the user interface 260.

In the implementation of FIG. 3, after the first operation, the electronic device needs to perform Pause processing on the activity of the first application. Because first attribute information is already set in advance in the first application, the electronic device cannot immediately respond to the first operation, and can display the picture for switching from the first application to the second application only after waiting for completion of the drawing of a first frame of the second window picture of the second application. The starting window cannot be displayed between switching.

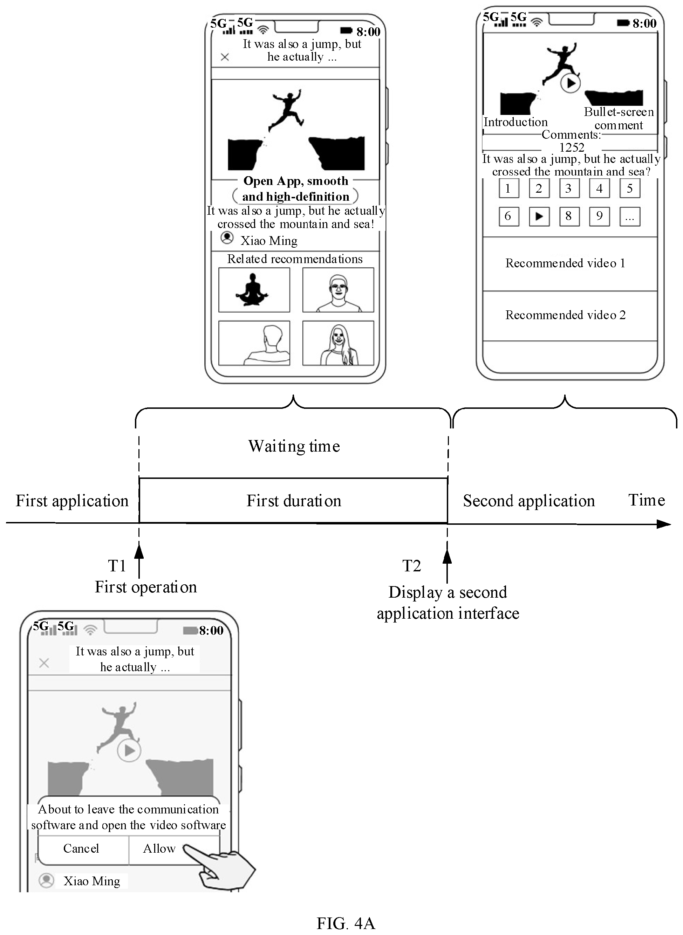

FIG. 4A, FIG. 4B(1), and FIG. 4B(2) are sequence diagrams for displaying a group of user interfaces.

As shown in FIG. 4A, before a moment T1, the electronic device displays the first application. At the moment T1, the user performs the first operation (for a tap operation, refer to related descriptions in FIG. 2E, and details are not described again). In response to the first operation, the electronic device needs to wait for first duration, and in a time period of the first duration, the electronic device keeps displaying a user interface (as shown in FIG. 2D) of the communication software (the first application). Starting from a moment T2, the electronic device starts to respond to the first operation, and displays a user interface (as shown in FIG. 2F) of the video software (the second application). The electronic device completes a process of jumping from a user picture of the first application to the second window picture of the second application.

In a display process of the electronic device in FIG. 4A, first duration such as 900 ms needs to be awaited from the user starting the first operation to a display interface starting to change. The first duration awaited is excessively long, and the user can notably perceive a lag in the display process, leading to poor user experience.

To resolve the foregoing problems, embodiments of this application provide an interface display method and an electronic device. When the electronic device obtains the jump event of the first operation, in this case, the electronic device may display waiting duration for responding to the display, thereby avoiding a display lag of the electronic device, and improving user interaction experience.

For example, as shown in FIG. 4B(1) and FIG. 4B(2), before the moment T1, a first application interface includes the starting window (as shown in FIG. 2E). At the moment T1, the user performs the first operation (for a tap operation, refer to related description in FIG. 2E, and details are not described again). After the moment T1, in response to the first operation, the electronic device needs to wait for second duration. In a time period of the second duration, the electronic device keeps displaying the user interface (as shown in FIG. 2D) of the communication software (the first application). Starting from a moment T3, the electronic device starts to respond to the first operation, and displays a dynamic picture for jumping. The first window picture of the first application starts to slide leftward, immediately followed by the second window picture of the second application on the right, until a jump interface is completely displayed. Starting from the moment T2, the electronic device starts to display the user interface (as shown in FIG. 2F) of the video software (the second application). The electronic device completes the process of jumping from the user picture of the first application to the second window picture of the second application. For example, the second duration is 90 ms, which greatly shortens the waiting time for display. With the waiting time of 90 ms, the user hardly perceives a lag.

In comparison with the display process in FIG. 4A, FIG. 4B(1), and FIG. 4B(2), response waiting duration of the electronic device is shortened, and the starting window is added to a response process, so as to ensure that a user does not perceive an obvious lag of a picture, thereby improving user experience.

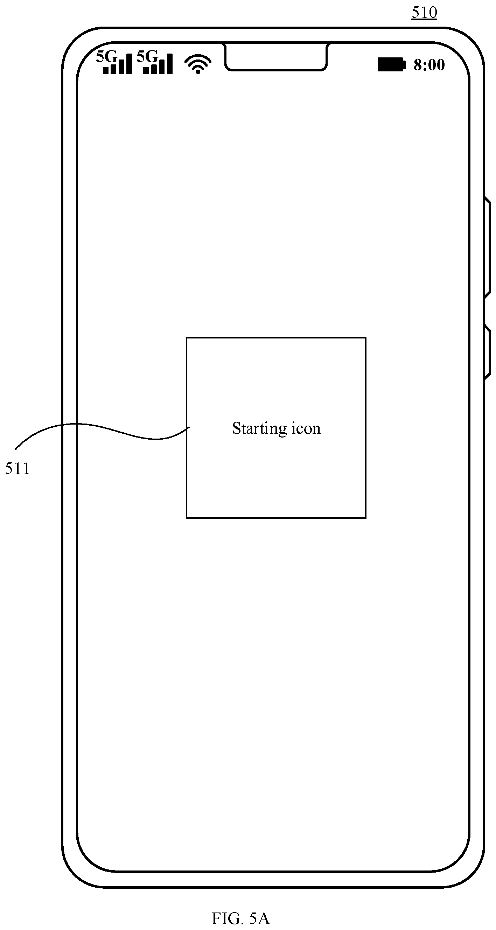

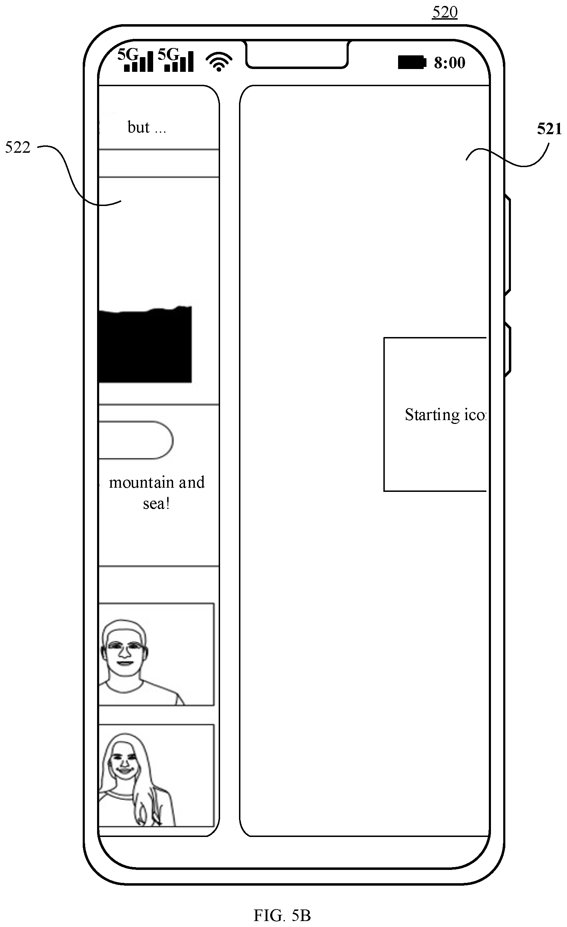

FIG. 5A and FIG. 5B are schematic diagrams of a group of user interfaces disclosed by way of example in an embodiment of this application.

In this embodiment of this application, a display interface of the electronic device in the communication software (the first application) and the video software (the second application) is the same as that in FIG. 2A~FIG. 2E. After FIG. 2E, in response to the first operation in FIG. 2E, as shown in FIG. 5A, the electronic device may first display a user interface 510. A starting window of the user interface 510 may include a starting icon 511 of the second application. Certainly, different types of software correspondingly display picture content of a user interface 260 of different video applications.

Optionally, in response to the first operation in FIG. 2E, in a switching process, the user interface of the electronic device may display a partial picture of the first window picture and a partial picture of the starting window; then, the user interface of the electronic device further displays the starting window without including the first window picture; and finally, the electronic device may display the second window picture in the user interface. In this way, a smooth sliding process is added to ensure continuity of the display and better user interaction experience.

Specifically, as shown in FIG. 5B, the electronic device may first display a switching animation (a user interface 520 in FIG. 5B) for switching from the first application to the starting window, then display a complete starting window (the user interface 510 in FIG. 5A), and finally display the second window picture (the user interface 260 in FIG. 2F) of the second application. This is equivalent to that the user interface 240 (the first window picture) of the first application starts to slide leftward, accompanied by the user interface 520 of the starting window starting to slide from the right to enter the display window. In a process of the switching animation, as shown in FIG. 5B, the user interface 520 may include a window picture 522 and a window picture 521. The window picture 522 is a right partial picture of the first window picture of the first application, and the window picture 521 is a left partial picture of the starting window. When display of the switching animation ends, the electronic device displays the user interface 510, where the user interface 510 does not include the window picture 522, but includes the complete window picture 521 (a picture of the starting window). Then, loading of a second application display interface of the electronic device is completed, and the user interface 260 in FIG. 2F may be displayed.

The picture of the starting window may be a picture for starting the second application, and may be an application icon picture, a floating picture, a wallpaper picture, a splash screen advertisement, or the like. Specific display content of the starting window is not limited in this application.

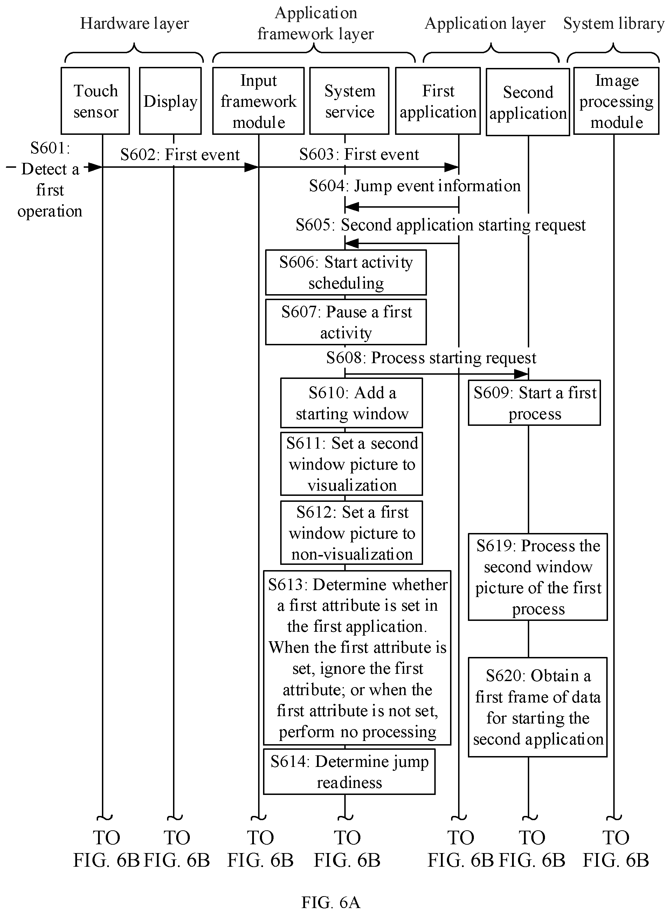

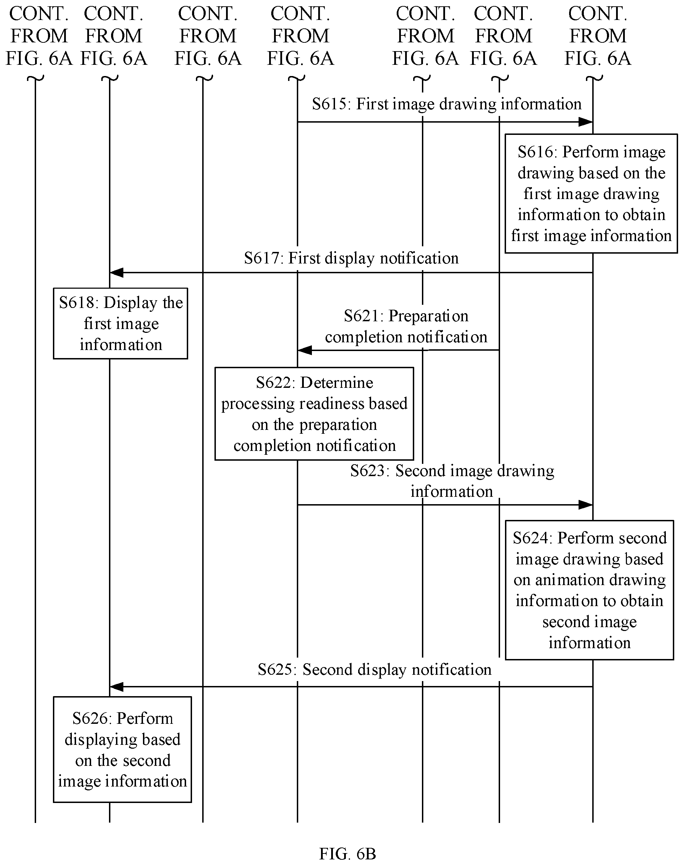

FIG. 6A and FIG. 6B are schematic flowcharts of another interface display method disclosed in an embodiment of this application.

With reference to FIG. 2A~FIG. 2E, FIG. 3, FIG. 5A, and FIG. 5B, the following describes the method in FIG. 6A and FIG. 6B in detail. The interface processing method may include but is not limited to the following steps.

Likewise, in this embodiment of this application, a first application and a second application are installed in an electronic device, and a jump needs to be performed between the two applications. Currently, the first application is in a started state, a first user interface displays an interface of the first application, a system service has an activity1 of the first application, and the activity1 is in an active state. The electronic device does not run the second application, that is, the activity of the second application does not run in the background of the electronic device.

S601: A touch sensor detects a first operation.

S602: The touch sensor sends a first event to an input framework module.

S603: The input framework module sends the first event to the first application.

S604: The first application sends jump event information to the system service.

S605: The first application sends a second application starting request to the system service.

S606: The system service starts activity scheduling based on the second application starting request.

S607: The system service pauses a first activity.

For related descriptions of S601~S607, refer to related descriptions of S301~S307. Details are not described herein again in this application.

S608: The system service sends a process starting request to the second application.

S609: The second application starts a first process.

For related descriptions of S608~S609, refer to related descriptions of S308~S309. Details are not described herein again in this application.

S610: The system service adds a starting window.

After receiving the process starting request, the system service may add the starting window, that is, may call an add starting window function.

S611: The system service starts to set a second window picture to visualization.

The system service may start the second window picture, and set the second window picture to a visual state. Specifically, the system service may call a shuold be visble function.

The second window picture is a window interface displayed by the second application.

The visualization indicates that a corresponding window picture is displayed. The non-visualization indicates that the corresponding window picture is not displayed.

S612: The system service sets a first window picture to non-visualization.

The system service sets the first window picture to a non-visual state. The first window picture is a user interface displayed by the first application. After the system service sets the first window picture to non-visualization, the electronic device may use another window picture to cover the first window picture, for example, use a blank window to cover the first window picture, or use the starting window to cover the first window picture. The first window picture is a window picture displayed by the first application.

In a process of performing S611 and S612, the electronic device may immediately perform a processing procedure on the first window picture after the first activity is paused, so as to ensure a speed and timeliness of an animation response.

S613: The system service determines whether a first attribute is set in the first application. When the first attribute is set, the first attribute is ignored, and S614 continues to be performed. When the first attribute is not set, no processing is performed, and S614 continues to be performed.

The first attribute includes at least one of a translucent attribute (window is translucent), a floating-disabled attribute (window is floating), and a wallpaper-disabled attribute (window show wallpaper). When the first attribute is jumping from the first application to another application (starting and displaying the window of the another application), a setting attribute of the starting window (of the another application) is not displayed. For example, in FIG. 4A, the electronic device jumps from the first application to the second application. The electronic device does not display a starting interface of the second application, but directly waits until a second window picture is started. The translucent attribute indicates that the starting window is displayed in a translucent state. The floating-disabled attribute indicates that the starting window is not displayed in a floating form. The wallpaper-disabled attribute indicates that the starting window is not displayed in a wallpaper form. Each attribute in the first attribute indicates that the starting window is not displayed.

Specifically, when the first application stores the setting information of the first attribute, the first attribute is set in the first application; or when the first application stores the setting information of the first attribute, the first attribute is not set in the first application. The setting information of the first attribute may be understood as any one type of information of the translucent attribute, the floating-disabled attribute, and the wallpaper-disabled attribute.

An API exposed to another application is set in the first application, and the first application may jump to the second application by using the API. The first attribute for jumping to another application may be set in the first application. When the system service of the electronic device determines that the first attribute is set in the first application, in the jump process, the system service does not add a starting window corresponding to starting another application.

For example, an attribute for jumping to a first activity being the translucent attribute is set in the communication software. In a process of jumping from the communication software to the video software, the electronic device determines that the translucent attribute is set, and may delete or ignore the translucent attribute, and continue to perform S614.

S614: The system service determines jump readiness.

When the second application is started and the first attribute of the first application is completed, the system service determines the jump readiness, and may start to request to draw the starting window.

S615: The system service sends first image drawing information to an image processing module.

The first image drawing information is drawing information for requesting the starting window of the second application.

S616: The image processing module performs image drawing based on the image drawing information to obtain first image information.

The first image information may be image information that includes the starting window.

In this embodiment of this application, both the starting window and the starting window are intermediate pictures for jumping from the window picture of the first application to the window picture of the second application, and may be starting pictures displayed when the second application is started.

S617: The image processing module sends a first display notification to the display.

S618: The display displays the first image information.

The electronic device may display the starting window, for example, the user interface 510 shown in FIG. 5A. Certainly, the first image information may be a plurality of consecutive animation pictures, and the electronic device may display an animation process of switching from the first window picture (the user interface 520) to the starting window (the user interface 510).

For a processing procedure of S614~S618, refer to related content of S313~S317. Details are not described again.

S619: The second application processes the second window picture of the first process.

S620: The second application obtains the first frame of data for starting the second application.

S621: The second application sends a preparation completion notification to the system service.

S622: The system service determines processing readiness based on the preparation completion notification.

S623: The system service sends second image drawing information to the image processing module.

S624: The image processing module performs image drawing based on the second image drawing information to obtain second image information.

S625: The image processing module sends a second display notification to the display.

S626: The display performs displaying based on the second image information.

For related descriptions of S619~S626, refer to related descriptions of S310~S317 in FIG. 3. Details are not described again.

In the foregoing implementation, in a process in which the electronic device switches from the first application to the second application, the first attribute that is set in the first application may be ignored. For a process of jumping to the second application that has not been run, the electronic device may add the starting window to respond more quickly to a user operation, thereby ensuring a higher response speed, a shorter delay, and better user experience.

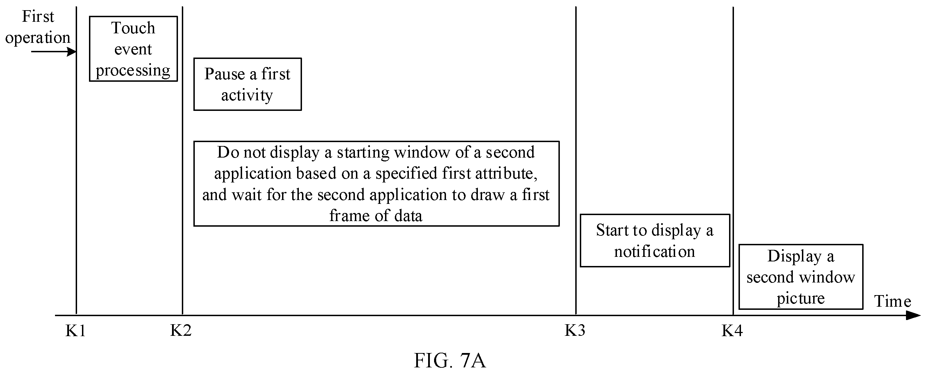

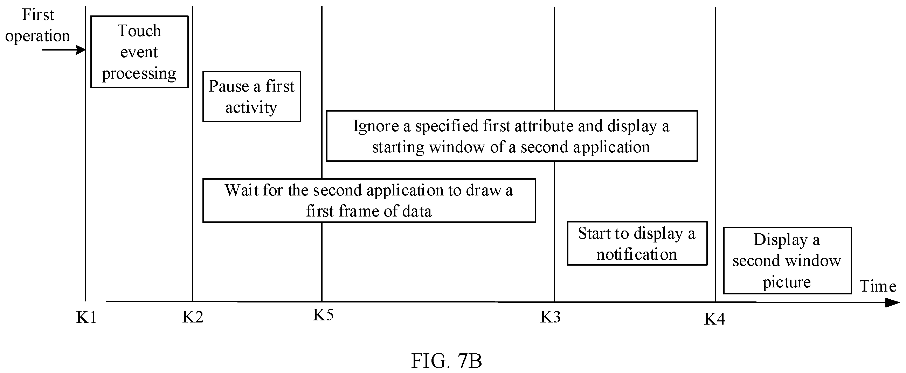

FIG. 7A and FIG. 7B are sequence diagrams of a group of application jump processing disclosed by way of example in an embodiment of this application.

As shown in FIG. 7A, with reference to a method procedure in FIG. 3, processing of the electronic device that is in a process is described in a time sequence from a moment K1 to a moment K4 as follows:

At the moment K1, the electronic device receives the first operation, and starts to process the touch event of the first operation after the moment K1, and the processing is completed before a moment K2.

After the moment K2, based on the touch event, the electronic device pauses the first activity of the first application, determines that the first attribute is set in the first application, cannot add the starting window, and needs to wait for the first frame of data that is used to start the second application. The jump process can be displayed only after drawing is completed.

After a moment K3, the electronic device may confirm that the drawing is completed, and notify to start to display the second window picture of the second application.

After the moment K4, the electronic device may start to display the second window picture.

With reference to the display processing procedures corresponding to FIG. 3 and FIG. 7A, starting from receiving the first operation of the user, the electronic device needs to wait for a time from the moment K1 to the moment K4, which is approximately 900 ms or above. If the interface of the second window picture is more complex, the time consumed is longer.

As shown in FIG. 7B, with reference to a method procedure in FIG. 6A and FIG. 6B, processing of the electronic device that is in a process is described in a time sequence from a moment K1 to a moment K4 as follows:

At the moment K1, the electronic device receives the first operation, and starts to process the touch event of the first operation after the moment K1. The processing is completed before a moment K2.

After the moment K2, based on the touch event, the electronic device pauses the first activity of the first application, and needs to wait for the first frame of data that is used to start the second application. The jump process can be displayed only after drawing is completed.

After a moment K5, it is determined that the first attribute is set in the first application, the first attribute is ignored, the starting window is still added, and the starting window of the second application starts to be displayed.

After the moment K3, the electronic device may confirm that drawing of the first frame of the second window picture is completed, and notify to start to display the second window picture of the second application.

After the moment K4, the electronic device may start to display the second window picture.

With reference to the display processing procedures corresponding to FIG. 6A, FIG. 6B, and FIG. 7B, starting from receiving the first operation of the user, the electronic device needs to wait for a time from the moment K1 to the moment K5, which is approximately 90 ms or above. A waiting time is shortened to approximately one tenth of the original time. Generally, a time during which the user can feel a lag of a display interface is approximately 155 ms. In this way, the response time is shortened, so that the user does not perceive a lag of response processing, thereby significantly improving user interaction experience.

As used in the foregoing embodiments, according to the context, the term "when ..." may be interpreted as "if ...", "after ...", "in response to determining ...", or "in response to detecting ...". Similarly, according to the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. An interface processing method, wherein the method is applied to an electronic device, a first application and a second application are installed in the electronic device, and the method comprises:
running, by the electronic device, the first application, and when a user interface of the electronic device displays a first window picture of the first application, receiving a first operation of a user for starting the second application; and
when a first attribute is set in the first application, in a process of starting and running the second application in response to the first operation, successively displaying, by the electronic device, a starting window and a second window picture of the second application in the user interface, wherein the starting window is an intermediate interface for starting the second application, and the first attribute is used to indicate not to display the starting window.

2. The method according to claim 1, wherein the first attribute comprises at least one of a translucent attribute, a floating-disabled attribute, and a wallpaper-disabled attribute;
the translucent attribute indicates that the starting window is displayed in a translucent state, the floating-disabled attribute indicates that the starting window is not displayed in a floating form, and the wallpaper-disabled attribute indicates that the starting window is not displayed in a wallpaper form.

3. The method according to claim 1 or 2, wherein the method further comprises:
when the first attribute is not set in the first application, successively displaying the starting window and the second window picture in response to the first operation.

4. The method according to claim 1 or 2, wherein the method further comprises:
determining, by the electronic device in response to the first operation, whether the first attribute is set in the first application, wherein
when the first application stores setting information of the first attribute, the first attribute is set in the first application; or when the first application stores setting information of the first attribute, the first attribute is not set in the first application.

5. The method according to any one of claims 1-4, wherein the method further comprises:
setting, by the electronic device in response to the first operation, the second window picture to visualization, and setting the first window picture to non-visualization, wherein
the visualization is used to indicate to display a window picture, and the non-visualization is used to indicate not to display a window picture.

6. The method according to claim 5, wherein before the setting the second window picture to visualization, and setting the first window picture to non-visualization, the method further comprises:
pausing a first activity of the first application.

7. The method according to claim 6, wherein after the pausing a first activity of the first application, the method further comprises:
starting a second activity of the second application, and obtaining a first frame of data used to start the second application; and
when the first frame of data is obtained, drawing image information of the second window picture.

8. The method according to claim 7, wherein the electronic device further comprises a system service, and the pausing a first activity of the first application comprises:
pausing, by the system service, the first activity of the first application after the first application receives the first operation of the user for starting the second application;
the method further comprises:
sending, by the system service, a process starting request to the second application, wherein the process starting request is used to request to start a process of the second application; and starting, by the second application, a first process;
the setting the second window picture to visualization, and setting the first window picture to non-visualization comprises:
setting, by the system service, the second window picture to visualization, and setting the first window picture to non-visualization; and
the starting a second activity of the second application, and obtaining a first frame of data used to start the second application comprises:
starting, by the system service, the second activity of the second application, and obtaining the first frame of data used to start the second application.

9. The method according to claim 4, wherein the electronic device further comprises a system service and a system library, and the determining, by the electronic device, whether the first attribute is set in the first application comprises:
determining, by the system service, whether the first attribute is set in the first application; and
the method further comprises:
when the first attribute is set in the first application, requesting, by the system service, the system library to draw image information of the starting window.

10. The method according to any one of claims 1-9, wherein the successively displaying a starting window and a second window picture of the second application in the user interface comprises:
displaying, at a first moment, a partial picture of the first window picture and a partial picture of the starting window in the user interface;
displaying, at a second moment, the starting window without comprising the first window picture in the user interface; and
displaying, at a third moment, the second window picture in the user interface.

11. An electronic device, comprising: one or more processors and one or more memories, wherein the one or more processors are coupled to the one or more memories, the one or more memories are configured to store computer program code, the computer program code comprises computer instructions, and when the one or more processors execute the computer instructions, the electronic device is enabled to perform the method according to any one of claims 1-10.

12. A computer-readable storage medium, wherein the computer-readable storage medium stores a computer program, and when the computer program is executed by a processor, the method according to any one of claims 1-10 is implemented.
